# FASCICULE DE BREVET EUROPEEN

(11) **EP 0 732 651 B1**
(45) Date de publication et mention de la délivrance du brevet: **26.09.2001**
(21) Numéro de dépôt: 96200507.0
(22) Date de dépôt: 27.02.1996
(51) Int. Cl.: G06F 9/46

(54) **Système de traitement d'informations pour effectuer des tâches ayant des priorités diverses et modem comportant un tel système**
Datenverarbeitungssystem zur Ausführung von Aufgaben verschiedener Prioritäten und dieses System enthaltendes Modem
Data processing system for executing tasks having diverse priorities and modem incorporating same

(30) Priorité: 15.03.1995 FR 9503013
(43) Date de publication de la demande: 18.09.1996
(73) Titulaire: Koninklijke Philips Electronics N.V., 5621 BA Eindhoven (NL)
(72) Inventeur: Picart, Catherine, F-75008 Paris (FR)
(74) Mandataire: Chaffraix, Jean

(56) Documents cités:
- EP-A- 0 413 873
- EP-A- 0 617 361
- IBM TECHNICAL DISCLOSURE BULLETIN, vol. 28, no. 9, Février 1986, ARMONK, NY, US, pages 4001-4003, XP002005160 "Asynchronous Task Scheduling"

## Description

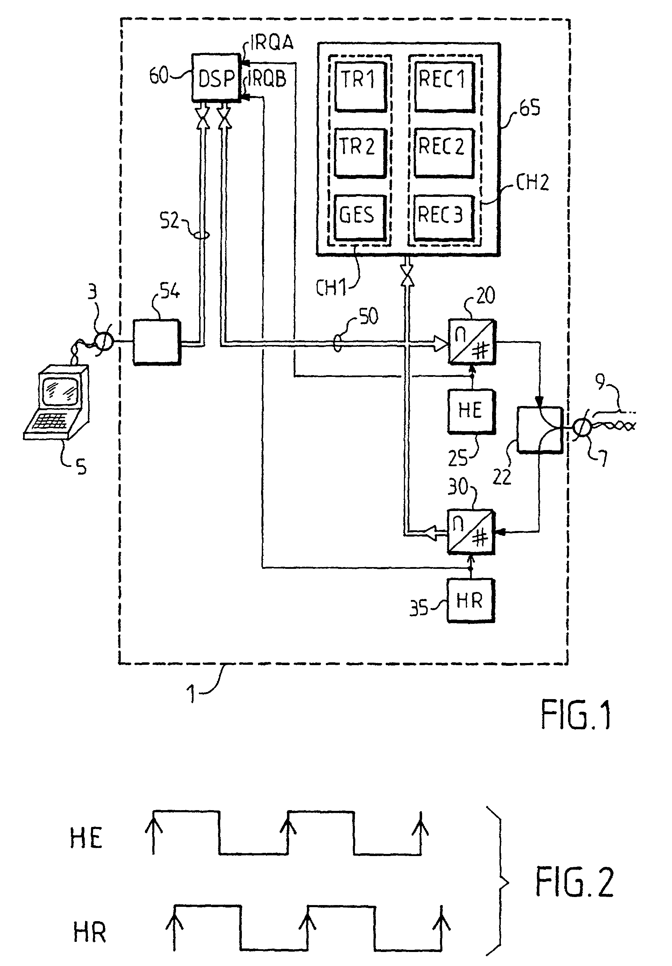

La présente invention concerne un système de traitement d'informations pour un séquencement de tâches dans lequel au moins deux chaînes de tâches sont à effectuer avec des degrés de priorités diverses et dépendant respectivement d'événements prioritaires, système comportant:
- des moyens de positionnement d'informations prioritaires (flg0 et flg1)
- des détecteurs de positionnement d'informations prioritaires placés dans au moins une desdites chaînes pour déclencher l'exécution de tâches d'une autre chaîne afférente à l'événement détecté,
- des codes d'emplacement de chaîne pour repérer l'emplacement d'interruption de traitement,
- des moyens de détection de codes d'emplacement pour continuer le traitement interrompu,

L'invention concerne aussi un modem dans lequel un tel système est incorporé.

L'invention concerne encore un procédé de traitement d informations pour un séquencement de tâches dans lequel au moins deux chaînes de tâches sont à effectuer avec des degrés de priorités diverses et dépendant respectivement d'évènements prioritaires, procédé comportant :
- des étapes de positionnement de drapeau de priorité déclenché par lesdits événements prioritaires,
- des étapes de mise en place de code d'emplacement pour repérer les tâches à effectuer en vue de les exécuter,
- des étapes de détection de codes d'emplacement pour continuer le traitement interrompu, après une interruption.

Un tel système trouve d'importantes applications. Notamment, il peut faire partie d'éléments de télécommunications dans lesquels, on est confronté à des problèmes de traitements en temps réel qui supportent très peu de retard pour effectuer certaines tâches ou même qui ne supportent aucun retard.

On trouvera dans le brevet européen n° 0 209 178 la description d'un tel système utilisé en radionavigation. Dans ce système, les différentes tâches à effectuer par un processeur sont déclenchées par des interruptions qui lui sont appliquées. Ceci implique donc que certaines tâches soient interrompues et qu'il faut donc prévoir des mesures pour sauvegarder le contexte de ces tâches. Ces mesures de sauvegarde prenant du temps au processeur provoquent un ralentissement du processeur, ce qui le ralentit dans son fonctionnement et est considéré comme un inconvénient.

Le document EP-A 0 413 873 évite d'interrompre certaines tâches ayant des priorités diverses en utilisant des mémoires tampons et en prévoyant des retards judicieusement déterminés.

La présente invention propose de simplifier cette gestion de tâches non interruptibles en utilisant des moyens particulièrement simples et peu coûteux.

Pour cela un tel système est remarquable en ce que les détecteurs d'événements sont placés dans des emplacements déterminés de la chaîne.

Un procédé conforme à l'invention est remarquable :
- en ce qu'il comporte, en outre des étapes de détections de positionnement de drapeau effectuées dans au moins une desdites chaînes, en des emplacements déterminés pour déclencher l'exécution de tâches d'une autre chaîne afférente à l'événement détecté,
- et en ce que lesdits emplacements sont constitués par des tests de positionnement des drapeaux de priorités effectués en dehors des tâches non interruptibles.

La description suivante faite en regard des dessins ci-annexés, le tout donné à titre d'exemple non limitatif, fera bien comprendre comment l'invention peut être réalisée.
La figure 1 montre un modem comportant un système de traitement de données conforme à l'invention.
La figure 2 montre l'allure de signaux d'horloge qui déclenchent des tâches prioritaires.
La figure 3 montre un organigramme explicitant le fonctionnement du modem de la figure précédente.

Le modem de la figure 1 comportant un système conforme à l'invention porte la référence 1. Ce modem 1 est muni de premiers accès 3 pour être raccordé à un terminal 5 et de deuxièmes accès 7 pour être raccordé à une ligne téléphonique 9. Les signaux analogiques transmis sur cette ligne téléphonique 9 proviennent d'un convertisseur numérique-analogique 20 via un circuit hybride 22. Ces signaux sont émis au rythme des signaux HE d'une horloge émission 25. Les signaux reçus de cette ligne sont appliqués à un convertisseur numérique-analogique 30 via ce même circuit hybride 22. Les signaux sont convertis sous forme numérique au rythme des signaux HR d'une horloge réception 35, pratiquement égal à celui des signaux HE. Les différentes données numériques qui proviennent du convertisseur 30 ou qui sont appliquées au convertisseur 20 sont véhiculées sur une ligne de données commune 50. Un organe d'interface 54 assure la liaison entre une ligne 52 et le terminal 5. Un processeur de signal 60, du type 5600 de Motorola, effectue le traitement de données conforme à l'invention en coopération avec une mémoire morte 65 contenant différentes instructions relatives aux différentes tâches à exécuter. Toutes les données transitent notamment par les lignes 50 et 52.

Toutes les tâches dont il va être question concernent les fonctions habituelles effectuées par les modems et qui n'ont pas besoin d'être détaillées car ne faisant pas partie de l'invention.

Ces tâches sont organisées en chaînes et chaque chaîne est affectée à un événement extérieur qui est par exemple le front montant des signaux HE et HR dont l'allure est représentée à la figure 2. La première chaîne CH1 est affectée au signaux HE et la deuxième CH2 aux signaux HR. Pour la première chaîne CH1 :
- TR1 : première tâche émission qui est la tâche la plus prioritaire de la chaîne ; d'une part elle concerne la modulation des données numériques provenant du terminal par une porteuse et d'autre part, la transformation en échantillons et l'envoi des échantillons au convertisseur 20.
- GES : cette tâche prend très peu de temps réel et peut concerner des tests impliquant peu d'instructions et pour cette raison suit la tâche TR1.
- TR2 : deuxième tâche émission, moins prioritaire que la tâche TR1. Elle concerne l'annulation d'écho. L'annuleur d'écho est un filtre adaptatif dont la période de convergence coïncide avec une tâche réception très réduite.

Dès que la convergence est réalisée, l'adaptation du filtre est un processus lent et devient une tâche peu prioritaire.

Pour la deuxième chaîne CH2 :
- REC1 : première tâche réception qui est la plus prioritaire de cette chaîne. Elle concerne la lecture des échantillons provenant du convertisseur 30 et leur filtrage.
- REC2 : deuxième tâche réception, moins prioritaire que la tâche REC1. Elle concerne la démodulation des échantillons et leur transformation en données numériques destinées au terminal 5.
- REC3 : troisième tâche réception, moins prioritaire que la tâche REC2 : adaptation des coefficients de l'égaliseur dont la convergence coïncide avec une tâche émission très réduite. Dès que la convergence est réalisée, l'adaptation est ralentie et devient une tâche moins prioritaire. Cette tâche comprend également le calcul de la qualité de la ligne et la détection d'événements dont la prise en compte n'est pas prioritaire.
Pour gérer tout le séquencement de ces tâches, on fait intervenir différents drapeaux.

Le drapeau "flg0" indique, si il est égal à "1", la nécessité d'exécuter la chaîne CH1, plus précisément la tâche TR1. Ce drapeau est mis à "1" lors d'un front montant du signal HE. Ce signal HE est appliqué à une entrée IRQA du processeur 60. Ce drapeau constitue donc un détecteur d'événement prioritaire.

Le drapeau "flg1" indique, si il est égal à "1", la nécessité d'exécuter la chaîne CH2 plus précisément la tâche REC1. Ce drapeau est mis à "1" lors d'un front montant du signal HR. Ce signal HR est appliqué à une entrée IRQB du processeur 60. Ce drapeau constitue donc aussi un détecteur d'événement prioritaire.

Les drapeaux suivants constituent des codes d'interruption pour indiquer l'emplacement d'une interruption qui est apparue dans la chaîne,

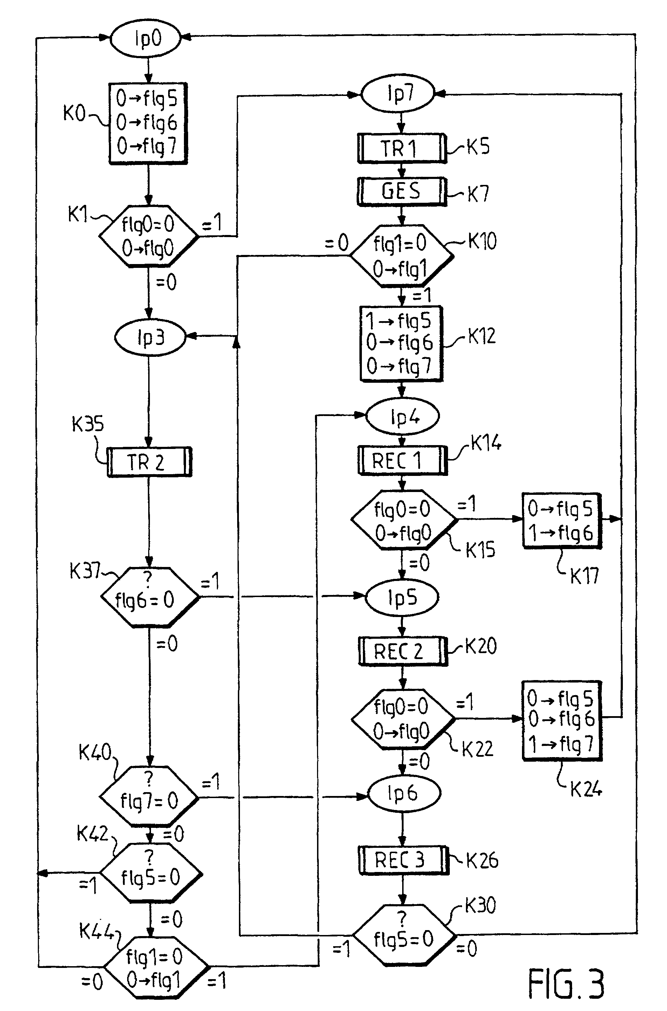

- flg5 :: indique que la chaîne CH1 a été interrompue donc que la tâche TR1 a été effectuée.
- flg6 :: indique une tâche réception interrompue entre les tâches REC1 et REC2, ou que REC1 a été effectuée.
- flag7 :: indique une interruption entre les tâches REC2 et REC3 et que donc REC2 a été effectuée.
On peut alors expliciter l'organigramme de la figure 3.

Le séquencement commence à la case K0 où les drapeaux flg5, flg6 et flg7 sont initialisés à "0". La case K1 indique si le signal d'horloge HE a pris la valeur "1". Ce test remet à zéro la valeur du drapeau flg0. Si cette valeur est "1", il faut alors entreprendre sans plus attendre, comme indiqué à la case K5, la tâche d'émission TR1 de la chaîne CH1, qui est la plus prioritaire. Une autre tâche GES, indiquée à la case K7, peut aussi être entreprise car elle ne prend pas trop de temps. La tâche TR1 exécutée, on teste à la case K10 si la valeur du signal d'horloge HR a pris la valeur "1". Si cette valeur est "1", on donne la valeur "1" au drapeau flg5 et "0" aux drapeaux flg6 et flg7 (case K12) avant d'exécuter la tâche prioritaire REC1 de la chaîne CH2 (case K14). Puis on teste à nouveau, à la case K15, la valeur du signal d'horloge HE pour savoir si il a pris la valeur "1". Si c'est le cas, on donne les valeurs "0" et "1" aux drapeaux flg5 et flg6 respectivement. On va ensuite à la case K5. Si le signal d'horloge n'a pas pris la valeur "1", on reste dans la chaîne CH2 et l'on va alors de la case K15 à la case K20 qui indique l'exécution de la tâche REC2, qui a un degré de priorité moindre que la tâche REC1. Après l'exécution de cette tâche REC2, on teste encore, à la case K22 la montée du signal d'horloge HE. Si oui, on retourne à la case K5 après avoir respectivement positionné à "0", "0" et "1" les drapeaux flg5, flg6 et flg7, ce qui permettra d'éviter de refaire des tâche déjà exécutées dans le même créneau temporel. S'il n'y a pas eu de remontée du signal HE on peut alors exécuter la tâche REC3, une tâche des moins prioritaires, ce qui est indiqué à la case K26. Puis on teste, à la case K30, la valeur du drapeau flg5. Si ce drapeau est nul, on retourne à la case K0. Si il a la valeur "1" cela signifie que la tâche TR1 a été effectuée et qu'il faut essayer de faire la tâche TR2 montrée à la case K35. Cette tâche effectuée, on teste ensuite à la case K37 la valeur du drapeau flg6. Si elle est égale à "1", on passe à la case K20, sinon on va à la case K40 pour tester la valeur du drapeau flg7. Si sa valeur est "1", on va à la case K26 sinon on va à la case K42. A cette case K42, on teste le drapeau flg5. Si sa valeur est "1", on retourne à la case K0 sinon on va à la case K44. Là, on examine le drapeau fig1. S'il est égal à "1", on va à la case K14 sinon on retourne à la case K0.

## Revendications

1. Système de traitement d'informations pour un séquencement de tâches dans lequel au moins deux chaînes de tâches (CH1, CH2) sont à effectuer avec des degrés de priorités diverses et dépendant respectivement d'événements prioritaires, système comportant :
- des moyens de positionnement d'informations prioritaires (fig0 et fig1)
- des détecteurs de positionnement d'informations prioritaires placés dans au moins une desdites chaînes pour déclencher l'exécution de tâches d'une autre chaîne afférente à l'événement détecté,
- des codes d'emplacement de chaîne pour repérer l'emplacement d'interruption de traitement,
- des moyens de détection de codes d'emplacement pour continuer le traitement interrompu,
**caractérisé en ce que** les détecteurs d'événements sont placés dans des emplacements déterminés de la chaîne.

2. Système de traitement d'informations, **caractérisé en ce que** les détecteurs de positionnement d'informations prioritaires sont constitués par des moyens de tests mis en oeuvre en dehors des tâches ou d'un ensemble de tâches non interruptibles.

3. Modem comportant un Système de traitement d'informations selon une des revendications 1 à 2, muni d'un accès pour recevoir des données d'une ligne de transmission au rythme d'une horloge réception, d'un accès pour émettre des données sur cette ligne de transmission au rythme d'une horloge émission et d'un accès pour un raccord avec un terminal, **caractérisé en ce que** les chaînes de tâches sont notamment liées au rythme des signaux de l'horloge d'émission et des signaux de l'horloge réception.

4. Modem selon la revendication 3, dans lequel des données à émettre sont modulées sous forme numérique avant d'être converties sous forme analogique sur la ligne de transmission par un convertisseur numérique-analogique et qui comporte un annuleur d'écho, **caractérisé en ce que** la première chaîne de tâches est constituée par au moins une des tâches:
- modulation des données numériques et envoi des échantillons audit convertisseur,
- annulation d'écho.

5. Procédé de traitement d'informations pour un séquencement de tâches dans lequel au moins deux chaînes de tâches (CH1,CH2) sont à effectuer avec des degrés de priorités diverses et dépendant respectivement d'évènements prioritaires, procédé comportant:
- des étapes de positionnement de drapeau de priorité déclenché par lesdits événements prioritaires,
- des étapes de mise en place de code d'emplacement pour repérer les tâches à effectuer en vue de les exécuter,
- des étapes de détection de codes d'emplacement pour continuer le traitement interrompu, après une interruption,
**caractérisé en ce qu'**il comporte, en outre :
- des étapes de détections de positionnement de drapeau effectuées dans au moins une desdites chaînes, en des emplacements déterminés pour déclencher l'exécution de tâches d'une autre chaîne afférente à l'événement détecté.

6. Procédé de traitement d'informations selon la revendication 5, **caractérisé en ce que** lesdits emplacements sont constitués par des tests de positionnement des drapeaux de priorités effectués en dehors des tâches non interruptibles.

## Patentansprüche

1. Datenverarbeitungssystem zur Ausführung einer Sequenz von Aufgaben, wobei mindestens zwei Aufgabenketten (CH1, CH2) mit verschiedenen Prioritätsgraden auszuführen sind, die respektive von vorrangigen Vorkommnissen abhängen, und das System beinhaltet:
- Mittel zur Positionierung von vorrangigen Daten (Fig. 0 und Fig. 1),
- Detektoren der Positionierung von vorrangigen Daten, in mindestens eine der Ketten eingebracht, um die Ausführung der Aufgaben einer anderen, das erkannte Vorkommnis betreffenden Kette auszulösen,
- Kettenstellenkodes, um die Stelle zur Unterbrechung der Verarbeitung zu finden,
- Mittel zur Erkennung von Stellenkodes zur Wiederaufnahme der unterbrochenen Verarbeitung,
**dadurch gekennzeichnet, daß** die Detektoren von Vorkommnissen an bestimmten Stellen der Kette angeordnet sind.

2. Datenverarbeitungssystem, **dadurch gekennzeichnet, daß** die Detektoren der Position von vorrangigen Informationen mittels Tests gebildet werden, die außerhalb nicht unterbrechbarer Aufgaben oder Aufgabenreihen durchgeführt werden.

3. Datenverarbeitungssystem nach einem der Ansprüche 1 bis 2, in ein Modem integriert, versehen mit einem Zugang, um Daten einer Übertragungsleitung im Takt einer Empfangsuhr zu erhalten, einem Zugang, um Daten über diese Übertragungsleitung im Takt einer Sendeuhr zu senden und einem Zugang zum Anschluß an ein Terminal, **dadurch gekennzeichnet, daß** die Aufgabenketten insbesondere an den Takt der Sendeuhrsignale und der Empfangsuhrsignale gebunden sind.

4. System nach Anspruch 3, in dem die zu sendenden Daten in numerischer Form moduliert werden, bevor sie in der Übertragungsleitung von einem Digital-Analog-Wandler, der einen Echoauslöscher aufweist, in analoge Form konvertiert werden, **dadurch gekennzeichnet, daß** die erste Aufgabenkette mindestens eine dieser Aufgaben enthält:
- Modulation digitaler Daten und Senden der Proben an den besagten Wandler,
- Auslöschen des Echos.

5. Datenverarbeitungsverfahren zur Ausführung einer Sequenz von Aufgaben, wobei mindestens zwei Aufgabenketten (CH1, CH2) mit verschiedenen Prioritätsgraden auszuführen sind, die respektive von vorrangigen Vorkommnissen abhängen, und das Verfahren beinhaltet:
- Schritte zur Positionierung von Prioritätsmarken, von den besagten vorrangigen Ereignissen ausgelöst,
- Schritte zur Anordnung von Stellenkodes, um die auszuführenden Aufgabe für ihre Ausführung zu finden,
- Schritte zur Erkennung der Stellenkodes zur Wiederaufnahme der unterbrochenen Verarbeitung nach einer Unterbrechung,
**dadurch gekennzeichnet, daß** es zudem enthält:
- Schritte zur Erkennung der Positionierung von Marken, in mindestens einer der besagten Ketten durchgeführt, an bestimmten Stellen, um die Ausführung der Aufgaben einer anderen, das erkannte Vorkommnis betreffenden Kette auszulösen.

6. Datenverarbeitungsverfahren nach Anspruch 5, **dadurch gekennzeichnet, daß** die besagten Stellen durch Tests zur Positionierung der Prioritätsmarken gebildet werden, außerhalb der nicht zu unterbrechenden Aufgaben ausgeführt.

## Claims

1. A data processing system for a sequencing of tasks, in which at least two chains of tasks (CH1, CH2) are to be executed with diverse degrees of priority and depend on respective priority events, which system comprises:
- priority data positioning means (Fig. 0 and Fig. 1),
- priority data position detectors placed in at least one of said chains for triggering the execution of tasks of another chain that can be assigned to the detected event,
- chain location codes for marking the location of the processing interruption,
- location code detection means for continuing the interrupted processing,
**characterized in that** the event detectors are placed at given locations of the chain.

2. A data processing system, **characterized in that** the priority data position detectors are formed by test means utilized apart from the tasks or a set of tasks that cannot be interrupted.

3. A data processing system as claimed in one of the Claims 1 to 2, incorporated in a modem, having an access for receiving data from a transmission line in timing with a receiving clock, an access for transmitting data on this transmission line in timing with a transmitting clock and an access for a connection to a terminal, **characterized in that** the task chains are notably connected in timing with the transmitting clock signals and the receiving clock signals.

4. A system as claimed in Claim 3, in which transmit data are modulated in digital form before being converted to analog form on the transmission line by a digital to analog converter and which comprises an echo canceller, **characterized in that** the first task chain is formed by at least one of the tasks of:
- modulating digital data and transmitting samples to said converter,
- echo cancelling.

5. A data processing method for a sequencing of tasks in which at least two chains of tasks (CH1, CH2) are to be executed with diverse degrees of priority and depend on respective priority events, which method comprises:
- priority flag positioning steps triggered by said priority events,
- location code positioning steps for marking the tasks to be executed with a view to executing them,
- location code detection steps for continuing the interrupted processing after an interruption
**characterized in that** it moreover includes:
- flag position detection steps carried out in at least one of said chains at locations determined for triggering the execution of tasks of another chain assigned to the detected event.

6. A data processing method as claimed in claim 5, **characterized in that** said locations are formed via priority flag positioning tests carried out apart from the tasks that cannot be interrupted.
